# EUROPEAN PATENT APPLICATION

(11) **EP 3 413 078 A1**
(43) Date of publication of application: **12.12.2018**
(21) Application number: 17747380.8
(22) Date of filing: 31.01.2017
(51) Int. Cl.: G01S 7/481, G01C 3/06, G01S 17/93, G02B 26/12

(54) **OBJECT DETECTION DEVICE OF OPTICAL SCANNING TYPE**

(30) Priority: 03.02.2016 JP 2016018721
(71) Applicant: Konica Minolta, Inc., Tokyo 100-7015 (JP)
(72) Inventor: NOGUCHI Kazutaka, Tokyo 100-7015 (JP)
(74) Representative: Gille Hrabal
(86) International application number: PCT/JP2017/003328
(87) International publication number: WO 2017/135224

(57) **Abstract**

An optical scan type object detecting apparatus, includes a light source that emits a light flux with a cross section being circular, a light projecting optical system into which a light flux emitted from the light source enters, a scanning device that makes a light flux scan in a main scanning direction, and a light receiving optical system that receives by a light receiving element a part of a light flux that is made so as to scan by the scanning device and is scattered on an object. The light projecting optical system shapes a light flux emitted from the light source such that a diameter, of a light flux made so as to scan by the scanning device, in a sub-scanning direction orthogonal to the main scanning direction becomes longer than a diameter in the main scanning direction, and, makes the shaped light flux enter the scanning device.

## Description

### Technical Field

The present invention relates to an optical scan type object detecting apparatus capable of detecting an object located far away.

### Background Art

In recent years, in the fields, such as a car and an aircraft, in order to detect obstacles existing forward in the proceeding direction, for example, an optical scan type object detecting apparatus has been developed and already put into actual use, which emits a laser light flux while scanning, receives a reflected light flux reflected by hitting objects, and acquires information of obstacles on the basis of a time difference between the time of emitting the laser light flux and the time of receiving the reflected light flux.

Such an object detecting apparatus, in addition to the detection of obstacles of a moving body as mentioned above, can be applied to a crime prevention use in which the apparatus is installed under the eaves of a building so as to detect suspicious persons and to a geographical feature investigation use in which the apparatus is mounted on a helicopter, an airplane, etc. so as to acquire geographical information from the sky. Furthermore, the apparatus can be applied to a gas detection use to measure gas concentration in atmospheric air, and to an aerosol detection use etc. to measure dust in atmospheric air.

In a general optical scan type object detecting apparatus, a light projecting system is constituted by a semiconductor laser serving as a light source and a collimating lens, and a light receiving system is constituted by a light receiving lens (or mirror) and a light detecting element such as a photodiode. Moreover, in many cases, a reflective mirror equipped with a reflective surface is disposed between the light projecting system and the light receiving system. In such a laser scanning type object detecting apparatus, a light flux emitted from the light projecting system is projected so as to scan by the rotation of the reflective mirror, whereby there is a merit that it is possible to measure an object two-dimensionally in a wide range not only one point. In this connection, as a light source, an LED etc. may be used other than a laser.

In the case where a laser light source is taken for an example, as a general scanning technique of a laser light flux, a technique has been known that makes a laser light flux scan by projecting the laser light flux onto a mirror or a polygon mirror with a plurality of mirror surfaces and by rocking the mirror or rotating the polygon mirror.

In a laser radar that projects a light flux from, for example, a semiconductor laser so as to scan for an object by rotating a mirror unit in which a plurality of pairs of a first mirror and a second mirror is disposed, Patent Literature 1 discloses a technique that makes it possible to scan on a plurality of different sub-scanning positions during one rotation by changing an intersecting angle between the first mirror and the second mirror for each of the pairs.

### Citation List

### Patent Literature

PTL 1: WO2014/168137A

### Summary of Invention

### Technical Problem

By the way, in the cross section of a light flux projected so as to scan for an object, in the case where a dimension in the sub-scanning direction is comparatively small relative to a dimension in the main scanning direction, since a range detectable by one scanning in the sub-scanning direction becomes narrow, in order to detect the whole object region, it becomes necessary to repeat the scanning a number of times. Then, in the Patent Literature 1, the scanning is performed for an object by using a light flux with a cross section in which a dimension in the sub-scanning direction is larger relative to a dimension in the main scanning direction, whereby the number of scanning times is reduced, and the scanning efficiency is improved. With this, there are merits, such as simplification of the constitution of mirrors. Generally, Since the light emitting surface of a semiconductor laser has a certain area, it is technically possible to set the cross section of a light flux emitted from a semiconductor laser such that a dimension in the sub-scanning direction becomes larger relative to a dimension in the main scanning direction.

On the other hand, there is a request that it is wanted to detect an object located far away more. However, since there is a limit in the intensity of a light flux emitted from a semiconductor laser etc., at the time of projecting a light flux emitted from the semiconductor laser etc. so as to scan for an object located far away, the light flux scattered from such an object is weak, and, moreover, the intensity of this scattered light flux further lowers in inverse proportion to the square of the distance. Therefore, even if a part of such the scattered light flux is received by the light receiving element located with a separated distance, distinction with noise cannot be performed, which leads to a problem that detection of an object becomes difficult.

For such a problem, there is a way of thinking that, in the case of using a light source with more high output, since the intensity of a scattered light flux from an object also increases according to it, it becomes easy for even a separated light receiving element to detect the scattered light flux. However, in the case of irradiating a light flux with high intensity under the environment where human being exists, it can be said that influence for a human body must be taken enough into consideration. However, for example, if it is a light flux with a wavelength of 1.4 µm or more and 2.6 µm or less, it is supposed that it will be hard to provide an obstacle to human eyes. Therefore, in the case where the wavelength of an emitted light flux is limited to 1.4 µm or more and 2.6 µm or less, it becomes possible to use a light source that emits a light flux with high intensity for a laser radar.

As a light source to emit a light flux that has a wavelength of 1.4 µm or more and 2.6 µm or less and has high intensity rather than a semiconductor laser, a fiber laser has been known. A fiber laser is those that put excitation light into a special optical fiber in which rare earth is added to the core of an optical fiber, confine only the light of a specific wavelength in the core so as to amplify, and, emit it as a laser beam of more high intensity. Here, due to the characteristics of the fiber laser, since a light emitting point becomes a point, in the case of using the fiber laser as a light source of a laser radar, a cross section of a light flux projected so as to scan an object becomes circular, and a dimension in the sub-scanning direction relative to a dimension in the main scanning direction becomes 1 to 1, which results in a problem that a scanning efficiency gets worse.

The present invention has been achieved in view of the above-mentioned circumstances, and an object of the present invention is to provide an optical scan type object detecting apparatus that can detect an object located far away and can secure a high scanning efficiency.

### Solution to Problem

An optical scan type object detecting apparatus that reflects one aspect of the present invention in order to realize at least one of the above-mentioned object is an optical scan type object detecting apparatus that includes:
a light source to emit a light flux with a cross section being circular;
a light projecting optical system into which a light flux emitted from the light source enters;
a scanning device to make a light flux emitted from the light projecting optical system scan in a main scanning direction; and
a light receiving optical system to receive by a light receiving element a part of a light flux that is scanned by the scanning device and is scattered on an object,
wherein the light projecting optical system shapes a light flux emitted from the light source such that a diameter, of a light flux scanned by the scanning device, in a sub-scanning direction orthogonal to the main scanning direction becomes longer than a diameter in the main scanning direction, and, makes the shaped light flux enter the scanning device.

### Advantageous Effects of Invention

According to the present invention, it is possible to provide an optical scan type object detecting apparatus that can detect an object located far away and can secure a high scanning efficiency.

### Brief Description of Drawings

[Fig. 1] Fig. 1 is a schematic illustration showing a state where a laser radar as an optical scan type object detecting apparatus according to the present embodiment is mounted on a vehicle.
[Fig. 2] Fig. 2 shows a cross section of a laser radar LR according to the present embodiment.
[Fig. 3] Fig. 3 is a perspective view showing a main part except a casing of a laser radar LR according to the present embodiment.
[Fig. 4] Fig. 4 is an illustration showing a state of scanning within a detection rage G of a laser radar LR with a laser spot light flux SB (indicated with hatching) emitted correspondingly to the rotation of a mirror unit MU.
[Fig. 5] Fig. 5 is a cross sectional view of a light projecting optical system according to another embodiment that can change the divergent angle of an emitted light flux.
[Fig. 6] Fig. 6 is a perspective view of a composite element CY' according to still another embodiment.

### Description of Embodiments

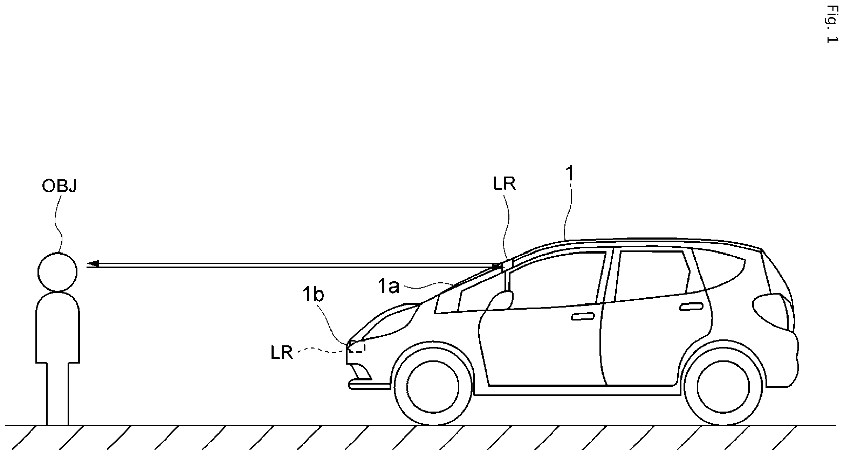

Hereinafter, an embodiment of the present invention will be described with reference to the attached drawings. Fig. 1 is a schematic illustration showing a state where a laser radar as an optical scan type object detecting apparatus according to the present embodiment is mounted on a vehicle. A laser radar LR in the present embodiment is disposed on the inside at the upper end of a front window 1a of a vehicle 1. However, it may be disposed on the outside of the vehicle (such as the back of a front grille 1b, etc.) other than it.

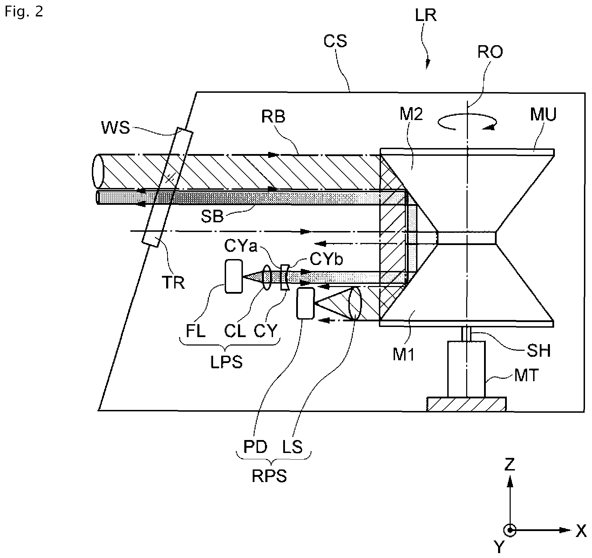

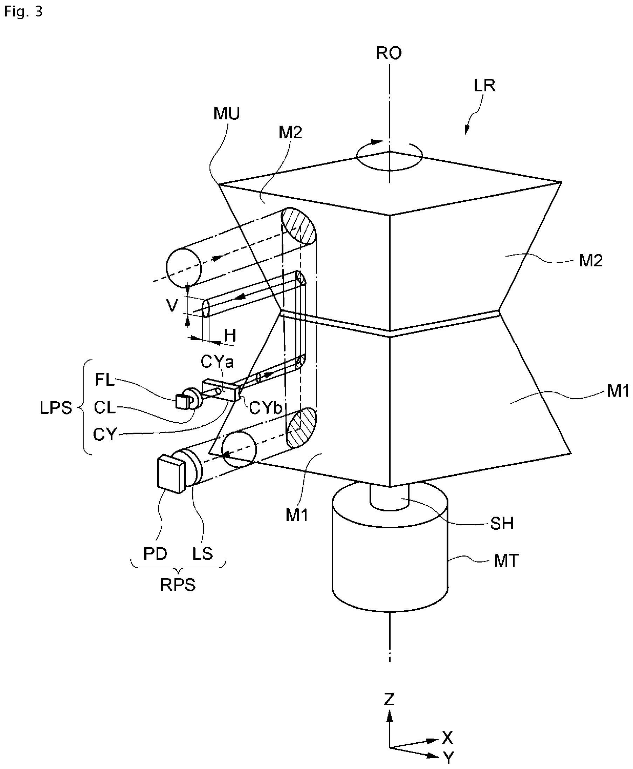

Fig. 2 shows a cross section of the laser radar LR according to the present embodiment, and although Fig 3 is a perspective view showing a main part except a casing of the laser radar LR according to the present embodiment, the shape, length, and so on of constitution components may be different from the actual configuration. The laser radar LR is accommodated in the inside of a casing CS as shown in Fig. 2. On a side portion of the casing CS, a window portion WS through which a light flux can be enter and exit, is formed, and the window portion WS is constituted by a transparent plate TR, such as resin.

As shown in Fig. 2 and Fig.3, the laser radar LR includes a fiber laser (light source) FL that emits such a laser light flux that a cross section is, for example, circular and a divergent angle in the main scanning direction becomes approximately equal to a divergent angle in the sub-scanning direction; a collimating lens (a divergent angle changing lens) CL that narrows the divergent angle of a diverging light flux from the fiber laser FL and converts into an approximately parallel light flux; a shaping lens CY that shapes the laser light flux having been made approximately parallel by the collimating lens CL and emits the shaped laser light flux; a mirror unit that projects a light flux so as to scan toward an object OBJ side (Fig. 1) by rotating mirror surfaces and reflects scattered light flux from the object OBJ having been scanned with the projected light flux; a lens LS that collects the scattered light flux having come from the object OBJ and having been reflected on the mirror unit MU; and a photodiode (light receiving element) PD that receives the light flux collected by the lens LS. In this connection, as the "fiber laser", for example, it is possible to use those described in Japanese Unexamined Patent Publication No. 2010-2129886. Moreover, the term "circular cross section" includes, in addition to those in which a cross section is perfectly circular, those in which a cross section is approximately circular. In the case where a cross section is approximately circular, it means those in which the minimum dimension / the maximum dimension of the cross section is 0.8 or more.

In the shaping lens CY, a surface on the lens LS side is a flat surface CYa orthogonal to the optical axis of the lens LS, and a surface on a side opposite to the lens LS is a concave curved surface CYb. The surface on the lens LS side may be made the concave curved surface CYb, and the surface on a side opposite to the lens LS may be made the flat surface CYa. Alternatively, the both surfaces may be made a concave curved surface.

In the case where the shaping lens CY is cut with a vertical plane that passes the optical axis of the lens LS and faces toward in the Z direction mentioned later, the concave curved surface CYb is represented with a curved line symmetrical to the optical axis, and in the case where the shaping lens CY is cut with a horizontal plane that passes the optical axis of the lens LS and faces toward in the Y direction mentioned later, the concave curved surface CYb is represented with a straight line orthogonal to the optical axis, and further, a cross sectional shape cut with a plane parallel to a vertical plane is all uniform. Since it has such a shape, when a circular light flux enters the shaping lens CY, the light flux is emitted after being shaped such that a dimension in the Y direction in its external shape is not changed, but a dimension in the Z direction is increased. That is, the shaping lens CY shapes such that in the external shape of a light flux after having been emitted with respect to a light flux before having entered, a dimension in the Z direction as a second direction corresponding to the sub-scanning direction becomes larger than a dimension in the Y direction as a first direction corresponding to the main scanning direction.

In the present embodiment, the collimating lens CL and the shaping lens CY constitute a light projecting optical system (an optical system for projecting light), and the lens LS constitutes a light receiving optical system (an optical system for receiving light). Furthermore, the fiber laser FL, the collimating lens CL, and the shaping lens CY constitute a light projecting system LPS, and the lens LS and the photodiode PD constitute a light receiving system RPS. The optical axis of the light projecting system LPS and the optical axis of the light receiving system RPS are approximately orthogonal to the rotation axis RO of the mirror unit MU, and both the optical axes are parallel to each other. Here, it is assumed that the direction of the rotation axis RO of the mirror unit MU is made the Z direction, the optical axis direction of the light projecting system LPS is made the X direction, and the direction orthogonal to the Z direction and the X direction is made the Y direction.

With reference to Fig. 3, the mirror unit MU as a scanning device has a configuration like that two quadrangular pyramids are jointed in the respective reverse directions to each other and made in one body. That is, it is a so-called two-time reflection type that includes four pairs of mirror surfaces M1 and M2 pared and inclined so as to face each other. The intersecting angle between the mirror surfaces M1 and M2 is different for each pair. It is preferable that the mirror surfaces M1 and M2 inclined in the direction intersecting to the rotation axis RO are formed by vapor-depositing a reflection film onto the surface of a resin material (for example, PC) shaped in the form of a mirror unit. The mirror unit MU is connected with a shaft SH of a motor MT, and, is configured to be driven and rotated.

Next, an object detecting operation of the laser radar LR is described. In Fig. 2 and Fig. 3, a diverging light flux emitted from the fiber laser FL and having a wavelength of 1.4 µm or more and 2.6 µm or less is converted into an approximately parallel light flux SB by the collimating lens CL, is shaped by the shaping lens CY, enters the first mirror surface M1 of the rotating mirror unit MU, is reflected here, further is reflected on the second mirror surface M2, thereafter, passes through the transparent plate TR, and is projected toward an external object OBJ side so as to scan as a laser spot light flux with, for example, a longitudinally-long cross section (in Fig. 3, a cross section in which a dimension V on an object in the sub-scanning direction is longer than a dimension H on the object in the main scanning direction, and preferably, V/H is 2 or more).

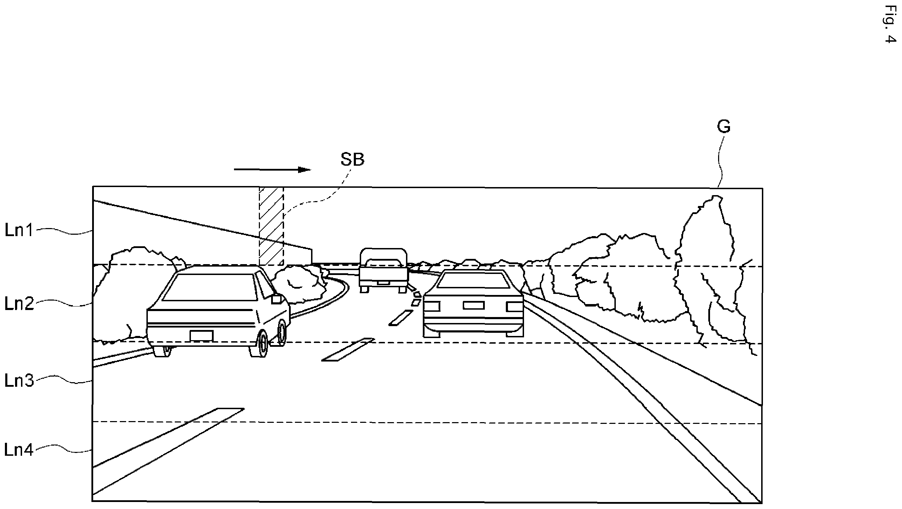

Fig. 4 is an illustration showing a state of scanning within a detection rage G of the laser radar LR with the emitted laser spot light flux SB (indicated with hatching) correspondingly to the rotation of the mirror unit MU. In combinations of the first mirror surface M1 and the second mirror surface M2 of the mirror unit MU, the intersecting angle is different for each of the combinations. The laser spot light flux is reflected sequentially by the rotating first mirror surface M1 and second mirror surface M2. First, the laser spot light flux reflected by the first pair of the first mirror surface M1 and the second mirror surface M2 is made to scan in the horizontal direction from the left to the right on the top region Ln1 of the detection range G correspondingly to the rotation of the mirror unit MU. Next, the laser spot light flux reflected by the second pair of the first mirror surface M1 and the second mirror surface M2 is made to scan in the horizontal direction from the left to the right on the second region Ln2 from the top of the detection range G correspondingly to the rotation of the mirror unit MU. Next, the laser spot light flux reflected by the third pair of the first mirror surface M1 and the second mirror surface M2 is made to scan in the horizontal direction from the left to the right on the third region Ln3 from the top of the detection range G correspondingly to the rotation of the mirror unit MU. Next, the laser spot light flux reflected by the fourth pair of the first mirror surface M1 and the second mirror surface M2 is made to scan in the horizontal direction from the left to the right on the lowermost region Ln4 of the detection range G correspondingly to the rotation of the mirror unit MU. With this, one scanning for the whole detection range G is completed. Successively, after the mirror unit MU has rotated one time, when the first pair of the first mirror surface M1 and the second mirror surface M2 returns, the scanning is repeated again from the top region Ln1 to the lowermost region Ln4 of the detection range G.

In Fig. 2 and Fig. 3, among the light flux having been projected so as to scan, some of the scattered light flux scattered by hitting on the object passes through again the transparent plate TR, enters the second mirror surface M2 of the mirror unit MU in the casing CS, is reflected here, further, is reflected on the first mirror surface M1, thereafter, is collected by the lens LS, and is detected by the light receiving surface of the photodiode PD. A time difference between the time of being emitted by the fiber laser FL and the time of being detected by the photodiode PD is acquired in a not-illustrated circuit, whereby a distance to the object OBJ can be known.

However, even if the scattered light flux from the object OBJ is reflected on the whole surface of each of the second mirror surface M2 and the first mirror surface M1, the scattered light flux is narrowed by the lens LS (in here, it is made a circle, however, not limited to the circle) functioning as an aperture stop. Accordingly, a light flux finally entering the photodiode PD become a part of the light flux. That is, among the scattered light flux having come from the object and having entered through the window portion WS, only a light flux indicated with hatching is collected by the lens LS, and, received by the photodiode PD. Here, it is assumed that the light flux to be collected by the lens SL is called a received light flux RB. As shows with a one-dot chain line in Fig. 3, a received light flux RB with a predetermined cross section is configured to enter the lens LS through the second mirror surface M2 and the first mirror surface M1. As is clear from the figure, as compared with each other on the first mirror surface, the area of the received light flux RB is larger than the area of the emitted light flux SB.

According to the present embodiment, the use of the fiber laser FL makes it possible to emit a light flux with comparatively high intensity. In addition, since the emitted light flux emitted from the fiber laser FL and having a circular cross section can be converted into a spot light flux having a longitudinally-long cross section by the shaping lens CY, while the number of times of scanning the detection range G is suppressed to be small and high scanning efficiency is secured, it becomes possible to detect effectively a photographic object located far away.

Furthermore, in the present embodiment, since the collimating lens CL is disposed between the fiber laser FL and the shaping lens CY, it is possible to acquire an effect that the positioning of the collimating lens CL for emitting a collimated light flux becomes easy. However, as a modified example to modify the arrangement example, it is also possible to dispose the shaping lens CY between the fiber laser FL and the collimating lens CL. According to this modified example, a light flux emitted from the fiber laser FL can be made to enter the shaping lens CY before being collimated. Accordingly, with this, the shaping lens CY can be miniaturized more, which leads to contribute to the miniaturization of the laser radar LR.

By the way, in the emitted light flux SB shown in Fig. 3, as the dimension V in the sub-scanning direction becomes more longer with respect to the dimension H in the main scanning direction, it becomes possible to detect a more wider range of a detection region by one scanning. However, corresponding to it, since the intensity, per a unit area, of the spot light flux SB projected so as to scan decreases, it becomes difficult to detect an object located far away. Then, it is convenient that the divergent angle of the spot light flux SB is made to be able to be changed correspondingly to the distance to an object.

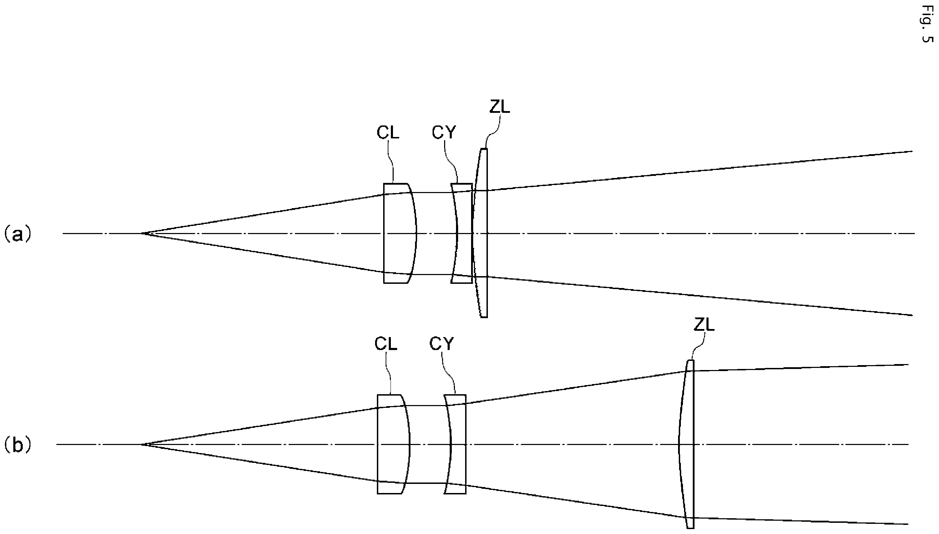

Fig. 5 is a cross sectional view of a light projecting optical system according to another embodiment that can change the divergent angle of an emitted light flux. In this embodiment, the collimating lens CL and the shaping lens CY are fixed to the casing CS not illustrated in Fig. 5, and further, the zoom lens ZL being a positive lens is arranged to be displaceable in the optical axis direction with respect to the casing CS. The collimating lens CL, the shaping lens CY, and the zoom lens ZL constitute the light projecting optical system.

According to the present embodiment, in the case of detecting a photographic object located with a short distance, as shown in Fig. 5(a), the zoom lens ZL is made close to the shaping lens CY side, whereby the divergent angle of an emitted light flux emitted from the zoom lens ZL is made to become wider. On the other hand, in the case of detecting a photographic object located with a long distance, as shown in Fig. 5(b), the zoom lens ZL is made far away from the shaping lens CY side, whereby the divergent angle of an emitted light flux emitted from the zoom lens ZL is made to become narrow, and a spot light flux with proper intensity is made to reach even a photographic object located with a long distance. For example, in the case where the laser radar LR is used for a surveillance use, it becomes possible to detect an object located with a short distance and also an object located with a long distance appropriately by displacing the zoom lens ZL in the optical axis direction in synchronization with the rotation of the mirror unit MU.

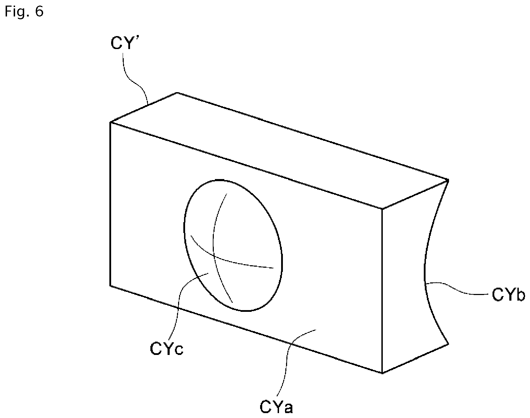

Fig. 6 is a perspective view of a composite element CY' according to still another embodiment. With respect to the shaping lens CV in the above-mentioned embodiment, the composite element CY' serving as an optical element is different only in a point that a convex surface CYc is formed integrally on a flat surface CYa. The convex surface CYc is constituted by a spherical surface or an aspherical surface that is point symmetric with respect to the optical axis, and, has a light collecting characteristic equivalent to the collimating lens CL. Therefore, in the present embodiment, the light projecting system LPS does not include the collimating lens CL, and, is constituted by the fiber laser FL and the composite element CY'.

In the present embodiment, the diverging light flux emitted from the fiber laser FL enters the convex surface CYc of the composite element CY' with which the light flux is converted into an approximately parallel light flux, and, with the concave curved surface CYb, the parallel light flux is shaped so as to have a longitudinally-long cross section, and then, the light flux is emitted, and, enters the first mirror surface M1 of the rotating mirror unit MU. According to the present embodiment, the single composite element CV' is provided with the functions of both the collimating lens and the shaping lens, whereby the number of parts can be reduced, which leads to contribute to the miniaturization of the laser radar LR. The matters other than those are similar to the above-mentioned embodiment. Accordingly, description for them is omitted.

The present invention should not be limited to the embodiments described in the specification, and it is clear for a person skilled in the art from the embodiment and the technical concept written in the present specification that the present invention includes the other embodiment and modified examples. The description and embodiment in the specification are prepared merely for the purpose of exemplification, and the scope of the present invention is shown by the claims mentioned later. For example, all the contents of the present invention having been described by using the drawings can be applied to the embodiments, and can be applied to crime prevention sensors to detect suspicious persons by being loaded onto aircrafts, such as a helicopter, or by being installed in a building and etc.

### Reference Signs List

- 1: vehicle
- 1a: front window
- 1b: front grille
- CL: collimating lens
- CS: casing
- CY: shaping lens
- CY': composite element
- G: detection range
- FL: fiber laser
- Ln to Ln4: region
- LPS: light projecting system
- LR: laser radar
- LS: lens
- M1: first mirror surface
- M2: second mirror surface
- MR: optical element
- MT: motor
- MU: mirror unit
- OBJ: object
- PD: photodiode
- RB: received light flux
- RO: rotation axis
- RPS: light receiving system
- SB: laser spot light flux (emitted light flux)
- SH: shaft
- TR: transparent plate
- WS: window portion
- ZL: zoom lens

## Claims

1. An optical scan type object detecting apparatus, comprising:
a light source to emit a light flux with a cross section being circular;
a light projecting optical system into which a light flux emitted from the light source enters;
a scanning device to make a light flux emitted from the light projecting optical system scan in a main scanning direction; and
a light receiving optical system to receive by a light receiving element a part of a light flux that is scanned by the scanning device and is scattered on an object,
**characterized in that** the light projecting optical system shapes a light flux emitted from the light source such that a diameter, of a light flux scanned by the scanning device, in a sub-scanning direction orthogonal to the main scanning direction becomes longer than a diameter in the main scanning direction, and, makes the shaped light flux enter the scanning device.

2. The optical scan type object detecting apparatus according to claim 1, **characterized in that** the light projecting optical system includes a divergent angle changing lens to change a divergent angle of a diverging light flux emitted from the light source and a shaping lens to shape the light flux, and the shaping lens shapes the light flux such that a dimension in a second direction corresponding to the sub-scanning direction becomes larger than a dimension in a first direction corresponding to the main scanning direction on the object.

3. The optical scan type object detecting apparatus according to claim 2, **characterized in that** the divergent angle changing lens is disposed between the light source and the shaping lens.

4. The optical scan type object detecting apparatus according to claim 2, **characterized in that** the shaping lens is disposed between the light source and the divergent angle changing lens.

5. The optical scan type object detecting apparatus according to any one of claims 2 to 4, **characterized in that** the light projecting optical system includes a plurality of optical elements including the divergent angle changing lens and the shaping lens, and a divergent angle of a light flux emitted from the light projecting optical system is made changeable by changing a distance on an optical axis of any of the optical elements.

6. The optical scan type object detecting apparatus according to claim 1, **characterized in that** the light projecting optical system includes an optical element having one surface through which the light flux passes is a spherical surface or aspherical surface that is rotationally symmetric in relation to an optical axis, and the other surface through which the light flux passes is a curved surface that is non-rotationally symmetric in relation to an optical axis, and
the optical element shapes the light flux such that a dimension in a second direction corresponding to the sub-scanning direction becomes larger than a dimension in a first direction corresponding to the main scanning direction.

7. The optical scan type object detecting apparatus according to any one of claims 1 to 6, **characterized in that** the light source is a fiber laser.

8. The optical scan type object detecting apparatus according to any one of claims 1 to 7, **characterized in that** the light source emits a light flux with a wavelength of 1.4 µm or more and 2.6 µm or less.

9. The optical scan type object detecting apparatus according to any one of claims 1 to 8, **characterized in that** the scanning device includes a rotating mirror, and the mirror, while reflecting a light flux emitted from the light projecting optical system, makes the light flux scan relative to the object in accordance with the rotation, and, reflects a part of a light flux scattered on the object and makes the part of the light flux enter the light receiving optical system.

10. The optical scan type object detecting apparatus according to any one of claims 1 to 8, **characterized in that** the scanning device is disposed so as to be rotatable by making a rotation axis a center, and, includes a plurality of mirror surfaces in a rotation direction, and respective angles of the plurality of mirror surfaces formed with the rotation axis are different from each other.
